# EUROPEAN PATENT APPLICATION

(11) **EP 4 664 415 A1**
(43) Date of publication of application: **17.12.2025**
(21) Application number: 24181241.1
(22) Date of filing: 10.06.2024
(51) Int. Cl.: G06V 10/774, G06V 10/25, G06V 10/94

(54) **GRID BASED TOOL**

(71) Applicant: SpatialX Diagnostics Ltd, London W11 4JA (GB)
(72) Inventor: Shaker, Noor, London, W11 4JA (GB)
(74) Representative: Potter Clarkson

(57) **Abstract**

A method for processing image data using an analysis model, comprising the steps of: receiving image data comprising an image; overlaying a patch grid overlay on the image, the patch grid overlay comprising at least one patch overlaying the image; receiving annotation information for the one or more patches overlaying the image; and analysing the annotation information to provide annotation quality information.

## Description

### FIELD OF THE INVENTION

The invention relates to systems and methods for providing quality control when annotating image data and processing annotated image data.

### BACKGROUND TO THE INVENTION

Images are increasingly processed using automated analysis techniques. This is particularly true on the context of medical imaging, where the utilization of deep learning techniques is becoming increasingly prevalent for tasks such as classification, segmentation, and clinical decision-making. Deep learning methods for computer vision have revolutionized the field of medical imaging by offering powerful tools for analysing complex datasets and extracting meaningful insights. However, the effective utilization of these techniques is contingent upon the availability of high-quality annotated data. Traditional approaches to image annotation, preprocessing and data preparation often work on relatively small images. Medical images pose challenges due to the size and dimensionality which can be a number of magnitudes larger than images in other domains. For example, images in the ImageNet dataset, a flagship dataset for training deep learning are of size 460 x 390, while an average whole-slide histopathology image may contain 100,000 x 100,000 pixels.

The large size of medical images imposed a limitation on data curation. Training data prepared from medical images is usually extracted from smaller regions within the image. This preserves the time required for annotation, which is usually performed partially within regions of interest. This approach suffers from limitations related to missing data, noise annotation and lack of real-time feedback.

To train deep learning models, image data is usually divided into patches, which are smaller rectangle windows of image data. Features from selected patches are combined to produce a representation of the image. Dividing the image into patches also allows faster processing since these patches can be distributed to multiple processing units facilitating parallelised computation. Dividing the images into smaller patches is an effective approach for image processing. Patchifying a medical image is particularly useful because of the image dimensionality and size that are prohibitively large to process the image in totality.

In machine learning, the accuracy and performance of the model are driven, to a large extent by the quality of the data used to train the model. Accordingly, there is a need for systems and methods which can help to provide higher-quality training data.

### SUMMARY OF THE INVENTION

According to a first aspect, there comprises a method for processing image data using an analysis model, comprising the steps of: receiving image data comprising an image; overlaying a patch grid overlay on the image, the patch grid overlay comprising at least one patch overlaying the image; receiving annotation information for the one or more patches overlaying the image; and analysing the annotation information to provide annotation quality information.

The annotation quality information may be used for quality control, ensuring that the quality of patches used for training the analysis model is known. This method thereby enables the generation of high-quality data for training machine learning algorithms, by optimising annotated patch generation.

In some scenarios, complete annotation of patches is required for best model performance. For example, when training a machine learning model to classify certain type of cells, it is preferred if all cells belonging to a specific class of interest are identified and annotated within each patch. It may also be advantageous that cells on the patch boundaries, where only part of the cell falls within the patch, are kept unannotated. Overlaying the patch grid on the image data enables visual information about the size and extent of each patch within the image to be compared against the annotation information. The included and excluded areas and the annotation boundaries to be included in the training data can then be determined.

The patch grid overlay may be generated pre- or post-annotation. Annotation information may be at the level of individual pixels, or may be on the patch level. If the patch grid overlay is provided before annotation, the annotation information may comprise information at a patch level. If an image region is annotated before patching, the patch grid may be configured to comprise patches of equal sizes that cover that annotated region as much as possible. If annotation is done after patching, the patch grid may be generated over all or part of the image. Annotation can be done by a human or another system.

Optionally, at least one property of the patch grid is determined by one or more characteristics of the analysis model. For example, the patch size may be set to a manageable size that can be processed by the analysis model using the available computing resources (such as RAM and GPU). The patch size can also be determined by the type of task to be performed by the analysis model so that for example, the patch size is big enough to capture a whole cell or multiple cells in cell identification systems. When dividing an image into patches, the size, overlap and class assigned to each patch may be done experimentally. Factors such as task, object size and model type and performance may play a major role.

In other examples, the properties of the patch grid may be set manually.

The patch grid overlay may comprise a contiguous regular arrangement of rectangular patches. In other examples, the patch grid overlay may be discontinuous and may comprise one or more irregularly shaped or arranged patches.

In some examples, the image data is pre-processed before overlaying the patch grid. Post-processing capabilities may include a range of image enhancement techniques, such as noise reduction, contrast adjustment, and image sharpening, tissue classification and background removal, improving the overall quality of the images before the overlay is applied.

Optionally, the method further comprises selecting a region of interest within the image; and overlaying a patch grid overlay on the image, the patch grid overlay comprising at least one patch overlaying the region of interest.

A region of interest may comprise a particular feature within the image, such as a tumour. Alternatively, regions of interest may be identified based on a system that optimises for data diversity, information gain or other factors that aim at optimising data quality.

The region of interest may be selected either by a user or automatically by a computer model.

In some examples, selecting a region of interest within the region comprises processing the image using a pretrained region identification system to identify a region of interest.

The region of interest may be selected based on the annotation task. For example, if the task is tumour analysis, then tumour regions may be identified and selected as the regions of interest. A patch grid is then overlaid over these regions. Regions of interest may also be selected based on model performance.

In some examples, the patch grid overlay is configured so that every patch corresponds to or covers a region of interest. A region of interest may be overlaid by multiple patches. In some examples, a patch generation function may be applied whereby the patch grid may also contain non-overlapping, partially overlapping patches whereby the overlap is optimised so that the maximum number of patches can be generated within a region of interest.

Patches generated post annotation often comprise incomplete or missing annotation data. This is because the fixed size of patches leads to areas that are not fully annotated. Such patches may be seen as "noisy", because the incomplete annotations may mislead subsequent analysis systems. Techniques can be applied to ensure that patches fall completely within the annotated region but these are usually computationally expensive.

One solution to ensure data quality would be to discard patches on the boundaries of the annotated region. This however leads to information loss since these areas might contain important information.

By analysing the quality of annotations within each patch and providing a quality score while annotation is being done, the model ensures that poorly annotated patches are highlighted for further annotation or discarding, while also not discarding well-annotated patches simply because they are at the edge of an annotated region.

Optionally, the annotation quality information comprises a quality score for the annotation information of each of the one or more patches.

Patches with low annotation quality scores may be highlighted for exclusion from the training data, or so that they can be displayed to a user on a display device.

In some examples, an image preprocessing system may be used for tasks such as identification of damaged areas within the image. Patches covering these areas may be automatically excluded from regions of annotations.

Optionally, the annotation quality information comprises one or more statistics representing a distribution of annotations across the one or more patches. This may enable the analysis of the number or area of annotated regions, highlighting biases in data and requirements for more annotations.

Optionally, the method further comprises providing instructions for displaying the image and overlaid patch grid overlay to a user on a display device. It may be advantageous to be able to visualise, inspect, edit and analyse the training data and get immediate feedback while doing the annotations. Ideally, patches should be visualized, annotated and edited within the context of the image and not separately patch-by-patch as individual images. The patching grid provides an ideal medium for this purpose, providing real-time feedback while doing the annotation and in the context of the image being annotated.

The patch grid overlay may comprise transparent or translucent components, enabling the user to see through the patch grid overlay to the image. This allows a user to compare the patch grid overlay to the image. In some examples, the transparency/opacity of one or more components of the patch grid overlay may be adjustable.

In some examples, displaying the image and patch grid overlay comprises displaying a split window where the image with and without the grid can be shown or whereby two different images can be visualized. When images are related, such as two variations of the image with different stains, applying one function on one image in a window may result in the same function or operation applied to the other. For example, selecting patches of a certain class in one image will also highlight the associated areas in the other image. Similarly, zooming in on one image will apply the same zoom in the other split window on the display device.

Optionally, the method further comprises processing the annotation quality information to generate an annotation guide for assisting the user to input further annotation information, and providing instructions for displaying the annotation guide to the user on the display device.

The annotation guide may be used to alert users to incompletely annotated patches. The annotation guide may visually represent or differentiate the annotation quality information. For example, patches or areas of the patch grid overlay could be colour-coded or overlaid with a score to highlight the level and/or quality of annotation. The annotation guide may also receive and display automatically generated suggested corrections, and may be configured to receive a user's input approving the automatic corrections.

The annotation guide enables annotations to be corrected and refined before patch generation is completed. This ensures that the final patches are completely annotated and have the correct classification, in turn ensuring high-quality data for machine learning. This optimises the annotation process, improves the overall model performance and ensures robust results.

The annotation guide may also include machine learning parameters such as patch number, stride or patch distribution, empowering users to make informed decisions during the annotation process.

In some examples, the annotation guide may guide a user in the sense that it informs the user that the annotation information is of sufficiently high quality, and no further annotations are required.

Optionally, the method further comprises selecting a region of interest within the image; and providing instructions for highlighting patches of the one or more patches which overlap the region of interest on the display device.

Highlighting patches overlapping a region of interest enables a user to prioritise annotating or analysing these patches, compared to other less relevant patches. Conversely, regions of low interest may also be identified. Patches overlapping regions of low interest that won't be included in training data may be highlighted. This for example may be performed by background removal or a tissue identification system that may automatically exclude patches. Excluded patches may be visually differentiated and can be edited for inclusion/exclusion criteria.

Optionally, selecting a region of interest comprises: providing instructions for displaying the image on the display device, and selecting a region of interest in response to a received region selection instruction, and optionally further comprising the steps of highlighting a set of suggested regions on the display device for selection as regions of interest.

Alternatively or additionally, regions of interest may be identified by a user's selection of patches. Selection of a patch may highlight similar or related patches in terms of classification, morphological features or according to other fingerprints/embeddings produced by other means such as an unsupervised learning system.

Optionally, the annotation information comprises user annotation information received from a user interface device. A user may be able to use the user interface device to select individual patches or groups of patches in the patch grid overlay in order to add annotations. Alternatively, the user may be able to add annotations directly to the image. The method then interprets the location of the annotations to determine the corresponding patch in the patch grid overlay.

Optionally, instructions may be provided for displaying a user interface on the display device and/or user interface device, for enabling a user to add annotation information more easily and accurately. For example, the user interface may comprise one or more selectable annotation tools. A polygon or rectangular annotation tool may allow a user to select a portion of a patch or the image and then label it with annotation information.

In some examples, the user interface device comprises a plurality of independent user devices with collaborative annotation functionalities. This may facilitate multi-user interaction and ensuring consistency across annotations. The annotation information may record which areas and patches are worked on by which user, which users are working on which patches, the annotation history, or general or user-directed comments on patches. This enables a collaborative approach which helps ensure consistency and accuracy across a dataset of image data.

The user interface device may comprise a mouse, a pen, a touchscreen or another interactive medium compatible with a display device. The user interface device may also comprise a chat interface whereby instructions may be given in natural language and converted to commands.

Optionally, the annotation information comprises information extracted from the received image data. In some examples, annotation information is received with the image data, and then further annotation information is received from a user device. For example, a user may be shown an annotated image and the patch grid overlay on the display device. The user may then provide annotation instructions via a user interface device in order to correct the annotations or add further annotations. This may be an iterative process, in which the user continues to modify the annotation information until the annotation quality information indicates that the annotations are of sufficiently high quality.

The user may select individual patches within the overlay grid to be included/excluded from the training data.

Optionally, the patch grid overlay comprises a plurality of patch grids.

This may enable multiple grids of multiple cell sizes to be overlaid separately or at the same time. Each patch grid may have distinct properties. These properties may include the grid spacing (i.e. the spacing between adjacent patches), patch size, associated annotation information, or display properties such as the transparency of the patch grid or outline colour of patches.

Multiple regions of interest may have the same properties (e.g. grid spacing) or different properties. These may be user defined. A section of a patch grid (or even a single patch) may comprise another patch grid within itself. For example, a patch grid overlay may comprise a low resolution, large-size patch grid overlaying the whole image, and a high-resolution, small-size patch grid which only overlays a region of interest within the low-resolution patch grid.

Optionally, the method further comprises modifying a property of the patch grid overlay in response to configuration instructions. The configuration instructions may enable users to fine-tune annotation strategies and experiment with different values. Configuration instructions may include instructions for selecting which patch grid to select for overlaying from a plurality of patch grids. Configuration instructions could also modify display properties of the patch grid overlay when it is displayed on a display device, e.g. the colour, border thickness, or transparency of the patch grid, or which patch grids are displayed and which are hidden on the patch grid overlay. Configuration instructions may also modify properties of a patch grid such as grid size or spacing.

In some examples, configuration information is received from a user interface device. For example, a user may be able to select or deselect different patch grids from the patch grid overlay to be displayed, or to change the colour/transparency/thickness of said patch grid. A user may be able to provide configuration instructions through an interactive display/user interface device, e.g. by drawing on a touchscreen to set the dimensions of patches in the patch grid overlay. A user may be able to set the editability of a patch or patch grid within the patch grid overlay, e.g. by locking a particular patch grid so that no other properties can be changed.

A configuration recommendation system may be applied to identify the best properties for the patch grid overlay, and then provide configuration instructions accordingly. For example, the configuration recommendation system may set model parameters (such as stride) for the patch grid overlay. This may be guided by the type of task for machine learning and the modality of interest.

In some examples, properties of the patch grid overlay may be interacted with and modified via tools provided in a user interface, enabling users to efficiently prepare datasets, annotate images with precision, and optimize data quality for enhanced model performance.

Optionally, the image data comprises medical image data, and optionally the image data comprises images of stained tissue or Whole Slide Image data.

In the medical domain specifically, and because the larger dimensionality that makes full annotation of the image a cumbersome task, it is particularly important to select the right region to extract training data from and it is critical that the data is of high quality. The method is therefore particularly advantageous for processing medical image data.

Optionally, the method further comprises the step of generating annotated image data for the analysis model from patches in the patch grid overlay, and optionally the patches are selected or weighted for the analysis model based on the annotation quality information. The annotated image data may comprise image files with embedded annotations, text files containing annotation metadata and objects annotated at different resolutions.

Optionally, the method further comprises processing the annotation quality information to screen the annotation information for erroneous annotations, and optionally further comprising the step of identifying and correcting an erroneous annotation within the annotation information based on the annotation quality information.

In some examples, a potential erroneous annotation may be highlighted to a user on display device for a user to correct using an interface device. This may comprise e.g. highlighting that an annotation may have been erroneously applied in a particular patch, such as misclassifying a cell or annotating part of the cell rather than the whole cell. The user can then use the user interface device to input annotation information to correct (or confirm) the annotation. Alternatively, annotations may be automatically removed or corrected to a different annotation.

In some examples, a suggested annotation correction may be displayed to a user for approval as part of the annotation guide.

Optionally, the annotation information comprises first and second sets of annotation information generated respectively from a first and second annotation system, and analysing the annotation information to provide annotation quality information comprises comparing the first and second sets of annotation information.

This enables the performance of the first and second annotation system to be compared. In some examples, the first and second annotation systems may comprise different iterations of the same model, thereby permitting analysis of the model's iterative performance over time.

In other examples, the first annotation system may comprise an automatic model and the second annotation system may comprise human manual annotations, thereby permitting analysis of the model's performance compared to a human annotator. The grid can be used to highlight patches with discrepancy in annotated objects.

Optionally, the method comprises classifying one or more patches in the patch grid overlay based on the annotation information and/or annotation quality information.

In some examples, a display property of the one or more classified patches or the patch grid overlay may be modified based on the classification. For example, all patches of the same class in a patch grid may be shaded in the same colour or assigned some other visually distinct identifier. In some examples, classification information may be received from a user interface device, enabling a user to manually classify or reclassify patches in the patch grid overlay.

According to a second aspect, there comprises a data processing device configured to carry out the method of any preceding claim.

According to a third aspect, there comprises a computer-readable storage medium comprising instructions which, when executed by a data processing device, cause the data processing device to carry out the method of the first aspect.

According to a fourth aspect, there comprises a computer program comprising instructions which, when executed by a data processing device, cause the data processing device to carry out the method of the first aspect.

### BRIEF DESCRIPTION OF THE DRAWINGS

Figure 1 illustrates a process flow diagram for carrying out an exemplary method.
Figure 2 illustrates a display device configured to display an image, patch grid overlay, and annotation quality information.
Figure 3 illustrates the annotation of a region of interest and overlaying of a patch grid overlay. Figure 3A shows a WSI image with an annotation indicating the region of interest, and Figure 3B shows the WSI image with a patch grid overlay.
Figure 4 illustrates two methods for generating a patch grid overlay.
Figure 5 shows an exemplary whole-slide image overlaid by a grid overlay.
Figure 6 graphically illustrates a method for performing patching.
Figure 7 illustrates a schematic block diagram of an exemplary data processing device for carrying out the method.

### DETAILED DESCRIPTION

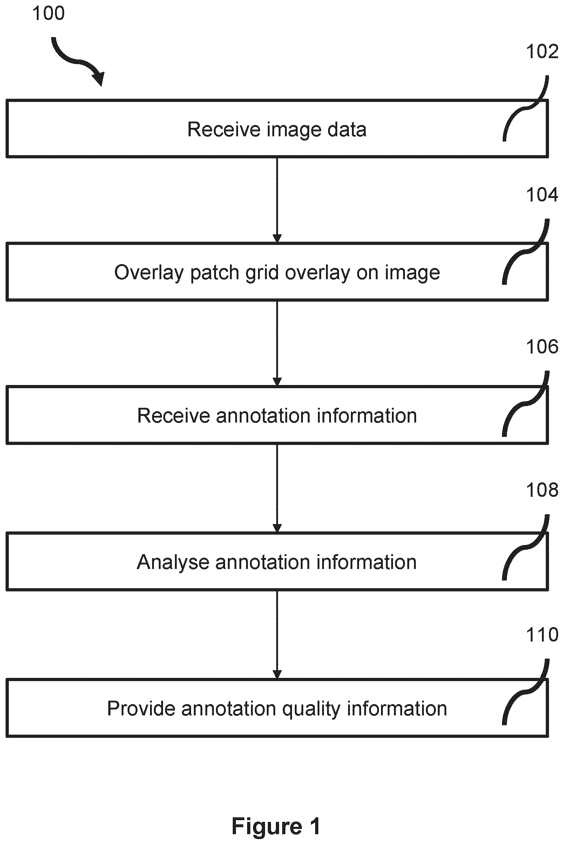

An exemplary method 100 for processing image data using an analysis model is described with reference to Figure 1.

In step 102, image data comprising an image is received. If the image data comprises a plurality of images, then the method 100 is repeated for each image.

In step 104, a patch grid overlay is overlaid on the image. The patch grid overlay comprises at least one patch overlaying the image. At least one property of the patch grid being determined by one or more characteristics of the analysis model.

In step 106, annotation information is received for the one or more patches overlaying the image. The annotation information may be received from a user via a user interface device. Alternatively or additionally, the annotation information may be provided with the original image data.

The annotation information is analysed to provide 110 annotation quality information. For example, the distribution of annotation information across the patch grid overlay may be determined.

The annotation quality information may characterise the noise level of the patch grid overlay, and/or of individual patches (e.g. via an annotation quality score for each patch).

Annotation quality information may characterise the patches in the patch grid overlay individually and/or in aggregate. For the patch grid overlay in aggregate, the annotation quality information may characterise whether the annotations are generally well-distributed (e.g. a mix of different annotations distributed consistently across patches or a balanced number of annotations of different classes) or poorly-distributed (e.g. annotations biased towards one class of annotation vs. others). The annotation quality information may comprise a statistic representing the distribution of annotations across one or more patches. Such statistics may comprise e.g. the number of annotations of each class and their distributions within different tissue types (e.g. the number of lymphocytes within stroma regions and the number of lymphocytes within tumour regions).

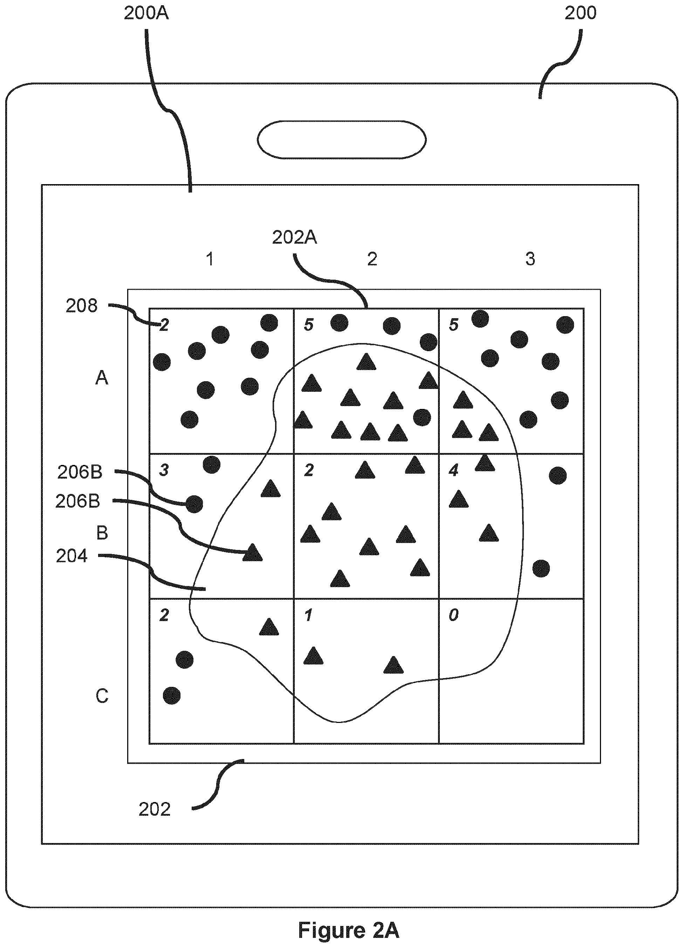

Figure 2A shows a display device comprising a display screen 200A. The display device 200 is configured to display an image 202. In this simplified example, the image 202 comprises two cell types: lymphocytes (located within a tumour region 204), and plasma cells (located around the tumour region 204). A patch grid overlay 202A comprising a plurality of patches A1-C3 has been overlaid over the image 202. The size of the patches in the patch grid overlay 202A is set by the analysis model to which the patches will be input.

The display device 200 is also configured to display 200 annotation information received along with the image data. The annotation information is displayed as triangles 206A indicating the location of lymphocytes, and circles 206B indicating the location of plasma cells. The annotation information 206 is analysed to generate annotation quality information in the form of an annotation quality score 208 for each patch A1-C3, which is displayed alongside each patch. The annotation quality score 208 is a score between 0 and 5, representing the quality of annotations in the corresponding patch. For example, patch A2 has been assigned an annotation quality score 208 of 5 because all lymphocyte cells within this region have been annotated with no partially segmented cells. At the other end of the scale, patch C3 comprises missed annotations, and has therefore been assigned an annotation quality score 208 of 0 indicating missing annotations. The remaining patches have been assigned annotation quality scores based on the completeness and quality of annotations located in the area of the image 202 corresponding to that patch. A higher annotation quality score 208 may indicate that a patch would be a more useful input to the analysis model.

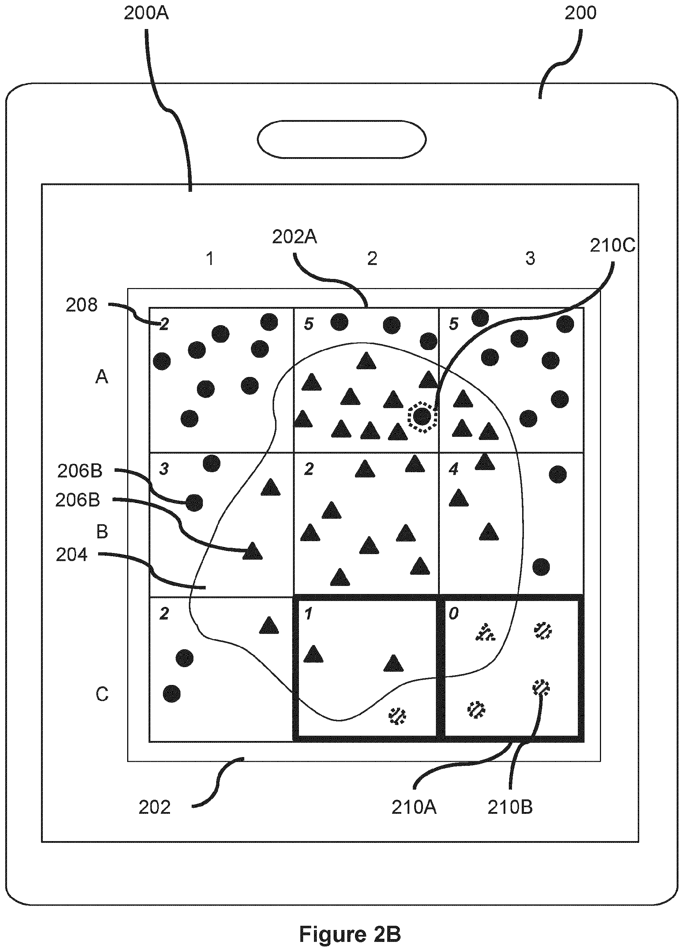

In Figure 2B, the display device 200 receives further instructions for displaying an annotation guide 210. The annotation guide 210 comprises a highlighted border 210A around patches with low corresponding annotation quality scores 208 (in this case lower than 1). The highlighted border 210A highlights example low-quality patches to a user, enabling them to take appropriate action (such as adding further annotations via a user interface or providing instructions to disregard a particular low-quality patch).

The annotation guide 210 also comprises annotation suggestions 210B. These are automatically generated, e.g. by a generic cell segmentation system. A user may select an annotation suggestion 210 in order to approve or reject it. If the user approves the annotation suggestion 210, then this suggested annotation is added to the annotation information. A user can also add annotations manually, for example by tapping/drawing portions of the image 202 and adding annotation labels. This annotation information is automatically associated with the patch in the patch grid overlaying that portion of the image 202.

The annotation guide 210 further comprises an error maker 210C for highlighting a potentially erroneous annotation. In this example, an erroneous marking of a lymphocyte as a plasma cell can be identified automatically by morphology, colour analysis or pretrained system. If the user agrees that the annotation is incorrect, the user may provide an input via the touchscreen 200A to correct classification of the marked erroneous annotation.

In this example, the display screen 200A of the display device 200 comprises a touchscreen, allowing the display device 200 to also function as a user interface device for receiving annotation instructions from a user. For example, a user may tap on annotation suggestions 210 to approve them.

In addition, the displayed annotation quality scores 208 effectively form part of the annotation guide 210, as a user may decide e.g. to add further annotations, correct or delete existing ones. The annotation quality scores 208, may be updated as new annotation information is provided and the annotation quality information is recalculated.

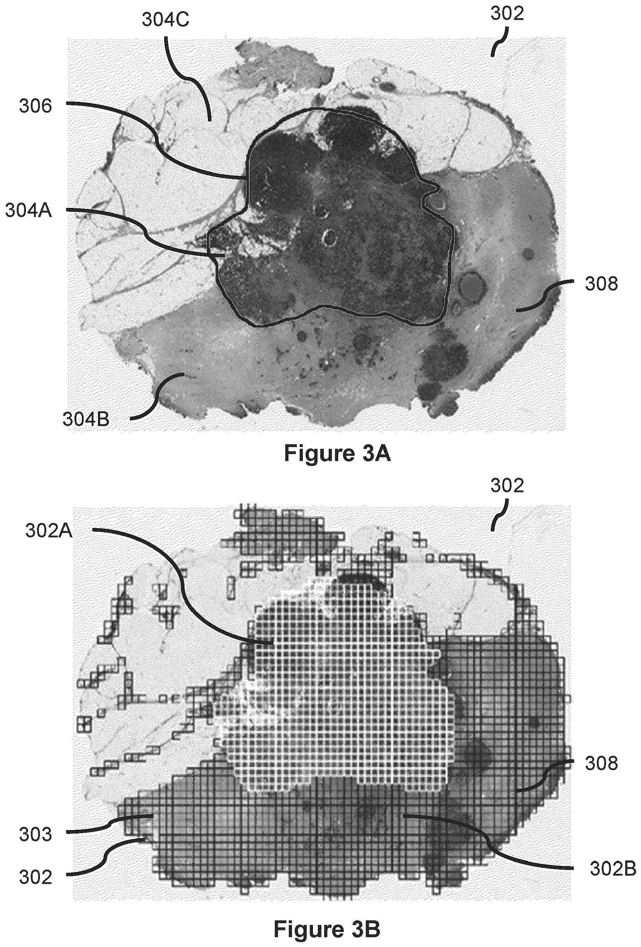

In some examples, a region of interest may be selected and the patch grid overlay is overlaid such that at least one patch overlays the region of interest. This is illustrated in Figure 3.

Figure 3A shows a medical image 302 (in this case a WSI image of stained tissue). The image 300 contains a tumour region 304A surrounded by other types of regions 304B and 304C. The image is processed to identify the tumour region 304A and another other region type 304B as a region of interest 308. This may be done manually, or automatically by a computer. For example, a region identification system may classify regions of the image by cell type and tissue modality, and then generate region selection instructions for selecting a subsection of these regions as regions of interest. In some examples, the region identification may highlight potential regions of interest. These are then displayed on a display device, whereupon a user may use a user interface device to provide region selection instructions (e.g. to approve the selection).

The approximate periphery of the tumour 304 is indicated by an annotation 306 made by a pathologist (by using a user interface device such as a touchscreen or a computer to mark the area). This annotation information is provided along with the image 300. In Figure 3B, a patch grid overlay 302 is overlaid over the image 300. The patch grid overlay comprises a plurality of patches 303. The patch grid overlay 302 as shown does not overlay the whole image 300. Instead, the patch grid overlay 302 only overlays the region of interest 308. Alternatively, the patch grid overlay 302 may overlay the whole image, but the display properties of the patch grid overlay 302 are set such that patches 303 overlaying the region of interest are highlighted, and patches 303 not overlaying the region of interest 308 are hidden.

The patch grid overlay has been subdivided into a plurality of patch grids according to the annotation information. A first patch grid 302A comprises the patches 303 overlaying the tumour region 304A. A second patch grid 303B comprises the remaining patches 303. To distinguish the first 302A and second 302B patch grids, configuration instructions are provided to modify the properties of the patch grid overlay such that the first patch grid 302A is displayed with white borders, and the second patch grid 302B is displayed with black borders. A user interface may enable a user to modify the properties of the patch grid overlay 302. For example, a user may configure the patch grid overlay such that the second patch grid 302B is hidden, enabling the user to focus on annotating the first patch grid 302B.

Annotation quality information for patches 303 may be related to the proximity of each patch 303 to the tumour edge annotation 306. For example, it may be more important that patches 303 in the edge region of the tumour 304A (the region where the tumour meets the surrounding tissue) are well-annotated. Accordingly, annotation quality scores may be generated for these edge region patches 303, and an annotation guide may be used to assist a user in adding or correcting further annotations.

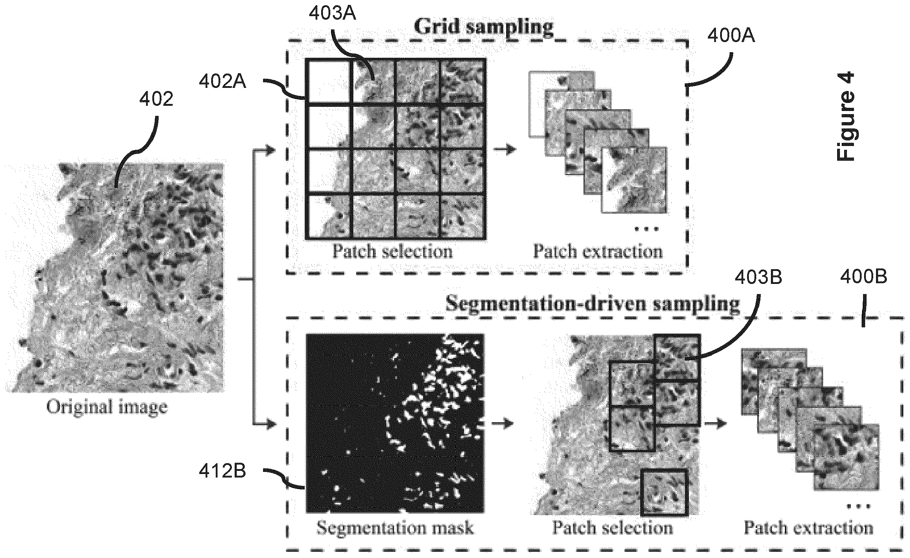

Figure 4 illustrates two methods for generating a patch grid overlay for an image 402. In the "grid sampling" method 400A, the patch grid overlay 402A overlaid on the image 402 comprises a uniform array of patches 403A. Annotation information is supplied once the patch grid overlay 402A has been overlaid.

In the "segmentation-driven sampling" method 400B, annotation information is supplied before overlaying a patch grid overlay. In this example, the annotation information is in the form of a segmentation mask 412B, indicating the location of a set of relevant cells or tissue. The patch grid overlay 402B is generated based on the annotation information, with patch grids 403B arranged so that the number of annotated cells covered by the patches is optimal.

In both methods, the patches 403A, 403B are then extracted and sent to an analysis model for processing and/or classification.

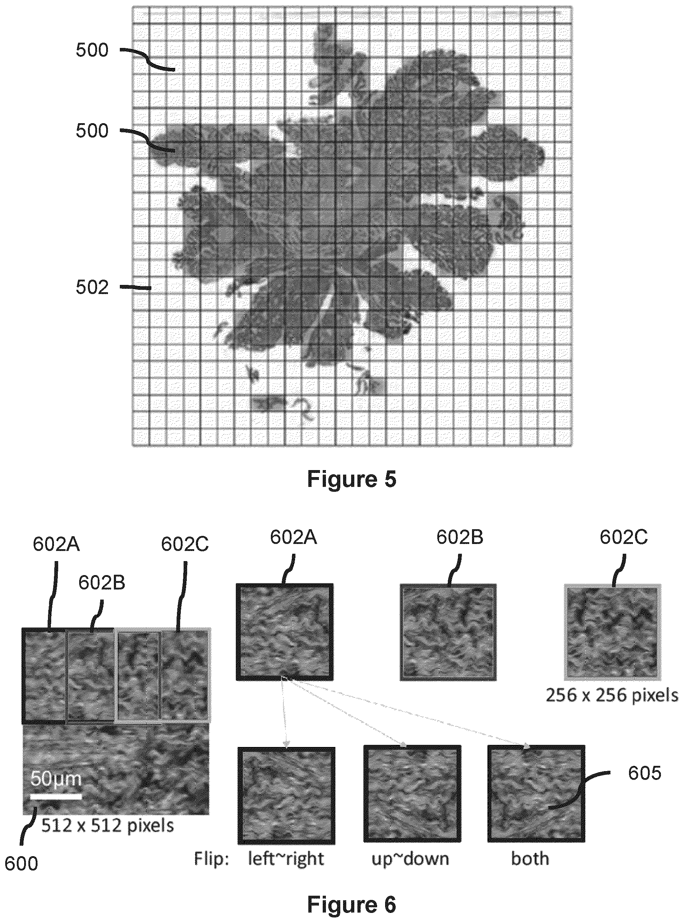

Figure 5 shows an exemplary medical image in the form of a whole-slide image 500 overlaid with a patch grid overlay 502. The whole-slide image 500 comprises a mix of tissue 504A and background 504B.

In this example, annotation information is extracted from the image 500 by identifying which patches 502A of the patch grid overlay tissue 504A, and which patches 502B overlay the background 502B. The patches overlaying tissue 504A may be highlighted on a display device, as shown in Figure 5, for selection or further annotation information by a user.

Figure 6 graphically illustrates a method for performing image patching. 3 overlapping patches 604A-C are overlaid over an image 600 using a sliding window (slide) overlay. Once annotated, the patches 600 can be extracted for analysis. To increase the number of patches and improve performance, synthetic patches 605 may be generated from each patch. In this example, 3 synthetic patches 605 are generated from patch 605A by mirror-flipping the original patch along different axes. This data augmentation may improve performance and increase the ability of an analysis model to generalise.

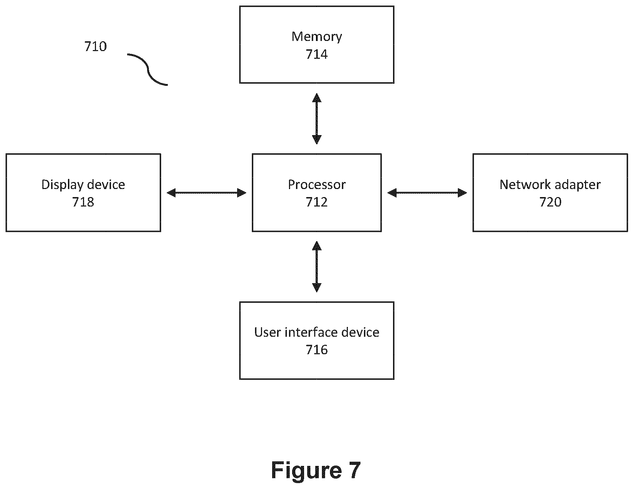

Figure 7 illustrates a schematic block diagram of a processing device for implementing the method. The processing device 710 comprises one or more processors 712 in communication with memory 714. The memory 714 is an example of a computer readable storage medium. The one or more processors 712 are also in communication with one or more user interface devices 716 and one or more display devices 718. The various components of the processing device 710 may be implemented using generic means for computing known in the art. For example, the user interface devices 716 may comprise a keyboard or mouse and the display devices 718 may comprise a monitor, screen, or printer. The display devices 718 may be used to display one or images and overlaid patch grid overlays. The user may then provide annotation information, configuration information or another input into the memory 714 using the user interface device 716, for example by using a user interface to approve a suggested annotation or to modify a parameter of the patch grid overlay.

In addition, the processing device 710 may comprise network access circuitry, such as a modem or network adaptor, to provide access to a network to obtain the image data and/or to transmit the determined infiltration pattern. Alternatively, a different data entry and/or recording means, such as a portable disc drive or data interface may be provided in addition to, or instead of, the network adaptor 720 to provide the image data to the processing device 710 and/or record the determined infiltration pattern.

It will be appreciated that, in some examples, the various hardware units may be integrated with one another. For example, where the processing device 710 is provided by a tablet computer or cellular telephone, a display of the device 710 may provide both the display of the display device 718 and a touch sensor providing the user interface device 716.

Examples of the invention are given in the following numbered clauses:
1. A method for processing image data using an analysis model, comprising the steps of:
   receiving image data comprising an image;
   overlaying a patch grid overlay on the image, the patch grid overlay comprising at least one patch overlaying the image;
   receiving annotation information for the one or more patches overlaying the image; and
   analysing the annotation information to provide annotation quality information.
2. The method of clause 1, further comprising:
   selecting a region of interest within the image; and
   overlaying a patch grid overlay on the image, the patch grid overlay comprising at least one patch overlaying the region of interest.
3. The method of any preceding clause, wherein the annotation quality information comprises a quality score for the annotation information of each of the one or more patches.
4. The method of any preceding clause, wherein the annotation quality information comprises one or more statistics representing a distribution of annotations across the one or more patches.
5. The method of any preceding clause, further comprising:
   providing instructions for displaying the image and overlaid patch grid overlay to a user on a display device.
6. The method of clause 5, further comprising the steps of:
   processing the annotation quality information to generate an annotation guide for assisting the user to input further annotation information, and
   providing instructions for displaying the annotation guide to the user on the display device.
7. The method of clause 5 or 6, further comprising selecting a region of interest within the image; and
   providing instructions for highlighting patches of the one or more patches which overlap the region of interest on the display device.
8. The method of clause 7, wherein selecting a region of interest comprises:
   providing instructions for displaying the image on the display device, and
   selecting a region of interest in response to a received region selection instruction, and optionally further comprising the steps of highlighting a set of suggested regions on the display device for selection as regions of interest.
9. The method of any of clauses 5 to 8, wherein the annotation information comprises user annotation information received from a user interface device.
10. The method of any preceding clause, wherein the annotation information comprises information extracted from the received image data.
12. The method of any preceding clause, wherein the patch grid overlay comprises a plurality of patch grids.
12. The method of any preceding clause, further comprising the step of:
   modifying a property of the patch grid overlay in response to configuration instructions.
13. The method of any preceding clause, wherein the image data comprises medical image data, and optionally the image data comprises images of stained tissue or Whole Slide Image data.
14. The method of any preceding clause, further comprising the step of generating annotated image data for the analysis model from patches in the patch grid overlay, and optionally the patches are selected or weighted for the analysis model based on the annotation quality information.
15. The method of any preceding clause, further comprising the step of processing the annotation quality information to screen the annotation information for erroneous annotations, and optionally comprising the step of identifying an erroneous annotation within the annotation information based on the annotation quality information, and optionally comprising the step of automatically correcting the erroneous annotation.
16. The method of any preceding clause, wherein the annotation information comprises first and second sets of annotation information generated respectively from a first and second annotation system, and analysing the annotation information to provide annotation quality information comprises comparing the first and second sets of annotation information.
17. The method of any preceding clause, further comprising the step of classifying one or more patches in the patch grid overlay based on the annotation information and/or annotation quality information.
18. The method of any preceding clause, wherein at least one property of the patch grid is determined by one or more characteristics of the analysis model.
19. A data processing device configured to carry out the method of any preceding clause.
19. A computer-readable storage medium comprising instructions which, when executed by a data processing device, cause the data processing device to carry out the method of any of clauses 1-17.
20. A computer program comprising instructions which, when executed by a data processing device, cause the data processing device to carry out the method of any of clauses 1 to 17.

## Claims

1. A method for processing image data using an analysis model, comprising the steps of:
receiving image data comprising an image;
overlaying a patch grid overlay on the image, the patch grid overlay comprising at least one patch overlaying the image;
receiving annotation information for the one or more patches overlaying the image; and
analysing the annotation information to provide annotation quality information.

2. The method of claim 1, further comprising:
selecting a region of interest within the image; and
overlaying a patch grid overlay on the image, the patch grid overlay comprising at least one patch overlaying the region of interest.

3. The method of any preceding claim, wherein the annotation quality information comprises a quality score for the annotation information of each of the one or more patches.

4. The method of any preceding claim, wherein the annotation quality information comprises one or more statistics representing a distribution of annotations across the one or more patches.

5. The method of any preceding claim, further comprising:
providing instructions for displaying the image and overlaid patch grid overlay to a user on a display device.

6. The method of claim 5, further comprising the steps of:
processing the annotation quality information to generate an annotation guide for assisting the user to input further annotation information, and
providing instructions for displaying the annotation guide to the user on the display device.

7. The method of claim 5 or 6, further comprising:
selecting a region of interest within the image; and
providing instructions for highlighting patches of the one or more patches which overlap the region of interest on the display device.

8. The method of claim 7, wherein selecting a region of interest comprises:
providing instructions for displaying the image on the display device; and
selecting a region of interest in response to a received region selection instruction and, optionally, further comprising the steps of highlighting a set of suggested regions on the display device for selection as regions of interest.

9. The method of any of claims 5 to 8, wherein the annotation information comprises user annotation information received from a user interface device.

10. The method of any preceding claim, wherein the annotation information comprises information extracted from the received image data.

11. The method of any preceding claim, further comprising a step of modifying a property of the patch grid overlay in response to configuration instructions.

12. The method of any preceding claim, further comprising a step of processing the annotation quality information to screen the annotation information for erroneous annotations, and optionally comprising the step of identifying an erroneous annotation within the annotation information based on the annotation quality information, and optionally comprising the step of automatically correcting the erroneous annotation.

13. A data processing device configured to carry out the method of any preceding claim.

14. A computer-readable storage medium comprising instructions which, when executed by a data processing device, cause the data processing device to carry out the method of any of claims 1-12.

15. A computer program comprising instructions which, when executed by a data processing device, cause the data processing device to carry out the method of any of claims 1 to 12.
